# EUROPEAN PATENT APPLICATION

(11) **EP 4 760 191 A1**
(43) Date of publication of application: **17.06.2026**
(21) Application number: 25158234.2
(22) Date of filing: 17.02.2025
(51) Int. Cl.: F28D 20/02, F28D 20/00, F28F 3/04, F28F 3/12

(54) **STORAGE DEVICE**

(30) Priority: 11.12.2024 EP 24219112
(71) Applicant: MoldTecs-01-2022 GmbH, 38667 Bad Harzburg (DE)
(72) Inventor: ROULAND, Eric, 76160 St Martin du Vivier (FR); ORTS, Raphael, 75012 Paris (FR); MASHAQI, Mohammed, 53000 Laval (FR); KRAIEM, Manel, 94700 Maisons Alfort (FR); KARKRI, Mustapha, 94800 Villejuif (FR); RIZOUG, Nassim, 53810 Changé (FR); LARDEUX, Sébastien, 53410 Saint Ouen des Toits (FR)
(74) Representative: STT Sozietät Thews & Thews

(57) **Abstract**

The invention relates to a thermal storage device (1) for latent heat based on phase change material (PCM), in particular to a storage device (1) for storing thermal energy with a casing with an inner volume (2) for receiving a fluid, wherein said casing has an inlet hose (2.3) and an outlet hose (2.4) for said fluid and wherein the storage device (1) contains phase change material PCM. Said casing has an upper casing (2.1) and a lower casing (2.2) attached to each other and encases an inner volume (2), wherein a conductive element (3) is positioned in said inner volume (2) and said conductive element (3) is separating said inner volume (2) into a storage volume (2a) for PCM and into a fluid volume (2b).

## Description

### TECHNICAL FIELD

The invention relates to a thermal storage device for latent heat based on phase change material (PCM), in particular to a storage device for storing thermal energy with a casing with an inner volume for receiving a fluid, wherein said casing has an inlet hose and an outlet hose for said fluid and wherein the storage device contains PCM.

### BACKGROUND

A generic storage device for storing thermal energy is known from US 2010 127 000 A1. This storage device is based on a latent heat storage by phase changes of particular material in a temperature range equal to room temperature. The component part can be packaged in mats which are similar to films with air chambers used for packaging sensitive and fragile articles. The storage device can bring about significant thermal energy savings for heating and cooling when incorporated in walls, ceilings and floors of buildings.

It is an object of the present invention to design and arrange a storage device for storing thermal energy in such a way that the exchange of the thermal energy in any direction and the thermal insulation are improved.

According to an aspect of the invention, the problem is solved in that said casing has an upper casing and a lower casing attached to each other and encases an inner volume, wherein a conductive element is positioned in said inner volume and said conductive element is separating said inner volume into a storage volume for a PCM and into a fluid volume. Especially the conductive element is tightly separating said inner volume into said storage volume and said fluid volume. The conductive element is tightly connected to the lower casing for separating said fluid volume from the storage volume. Volume in the sense of the invention is a room or a space or a capacity in a casing for storing or receiving a medium.

Thermal energy can be exchanged between the fluid stored in the fluid volume and the PCM stored in the storage volume. The fluid, especially a coolant, flows inside a fluid volume which is via the conductive element thermally connected to the PCM. The fluid or liquid could be for example water, alcohol, ethylene glycol, refrigerant or oil. The PCM can cool down or heat up the fluid based on the need of the application. The thermal insulation is based on a hybrid system. For that the casing is made of plastic or any elastic insulating material and the conductive element inside the housing is made of metal or any conductive material, for example conductive plastic. Conductive materials in combination with insulating materials build up such a hybrid system. The conductive element located between said two volumes is directly in contact with the fluid and with the PCM. The thermal energy is transferred through the two opposite sides of the conductive element, which are in contact with the fluid and the PCM respectively. However, the conductive element can be made of a variety of conductive materials, depending on the required performance of the application. The joint between the casing and the conductive element is creating a tight connection between plastic and metal. The conductive element has a large surface that forms cavities or cells in the shape of honeycomb, fins, pins, walls etc. The upper casing is sealed to the lower casing to prevent any leakage in the structure. For encreasing the transfer of thermal energy the surface of the lower casing has a structure of dimples, asperities or inner ribs or walls. This structure is generating turbulences in the fluid which encreases the heat transfer. The metal part in contact with fluid can be very simple as all the turbulence enhancement are achieved by the plastic part. Any conductive element in the sense of this invention has a thermal conductivity larger than 10 [W/mK] (Watt per metre and Kelvin).

The special flat shape offers design freedom for easy integration into predefined installation spaces. According to the application multiple storage devices can be stacked together in a compact manner. Fixations and connections are designed to allow such stacking. PCM can have volumetric expansion during melting and volumetric retractation during solidifying. Those volumetric variations are absorbed due to the elasticity of the casing. Additional or alternative elastic patches or areas are integrated in the casing.

The storage device is positioned in parallel to a cooling circuit, for example in a battery cooling circuit and is used to cool the fluid without heat recovery and at a constant temperature level of the PCM over a range of increasing heat quantities of the fluid. The following features are essential to the invention.

According to a relevant aspect of the invention[2] said lower casing and said upper casing each form a half-shell. Each half-shell has an open side and forms part of the inner volume of said storage device. The two half-shells are put together with their open sides against each other to form said casing. Said upper casing forms one single storage volume and said lower casing forms one single fluid volume, wherein said inner volume is a combination of said single storage volume and said single fluid volume. A single volume is to be understood as a volume that is defined or formed by a single housing. This has the advantage that the respective medium, such as fluid or PCM, forms a coherent unit in both the storage volume and the fluid volume. This coherent unit is not, for example, separated or subdivided by several different, separate housings or housing sections. Accordingly, for example, the fluid can flow between the inlet hose and the outlet hose within the lower casing through the fluid volume. The thermal energy within the PCM can spread throughout the entire storage volume. According to the invention a single volume is not divided into several smaller volumes or several smaller housings or housing sections.

It is advantageous in terms of production that [3] said conductive element is a separate element being totally located in said inner volume, wherein said conductive element is tightly attached to said upper casing and / or to said lower casing. After the two casings have been produced, the conductive element is first connected to one of the two casings, preferably to the lower casing. This makes it possible to use a different connection method for the conductive element than for the connection of the two casings. In addition, it can be ensured that the connection of the conductive element to the lower casing is tight before the two casings are connected to each other. For a design freedom for easy integration it is important that said upper casing and / or said lower casing is tightly mounted at said conductive element with at least one of the following methods: glueing, soldering, welding, melting and / or with a form fitting locking.

In relation to an easy closable connection, said upper casing and said lower casing each have a flange, wherein said encircling flange is encircling said casing, wherein said upper casing is mounted tightly with its encircling flange at said encircling flange of said lower casing. The connection of the two casings is completely independent of the connection of the conductive element to one of the two casings.

An important aspect of the invention is, that said conductive element has a base plate and said base plate is tightly attached to said upper casing and / or to said lower casing. Accordingly, the connection between the conductive element and one of the two casings is independent of the connection between the two casings.

It is a thermal advantage that said casings are made of plastic or thermoplastic or a combination with ceramic and said conductive element is made of a metal or conductive thermoplastic, having a thermal conductivity larger than 10 W/(mK). The casings are elastic. PCM can have volumetric expansion during melting and volumetric retractation during solidifying. Those volumetric variations are absorbed due to the elasticity of the casing. A basic idea is that a PCM is encapsulated in said single storage volume between said upper casing and said conductive element. The claim from this invention is not only directed to the storage device per se, but also to the combination with PCM.

It is advantageous in terms of design freedom that a geometrically definable geometrical area (GA) of said casing is defined in parallel to and between said two encircling flanges of said casing, wherein said geometrical area (GA) defines a geometrically 2D- or 3D-running plane and / or a curved surface area and / or several planes or surface areas arranged inclined to each other. The basic design and construction of the storage device enables a substantially flat construction with complex three-dimensional designs. The essential geometric element for this design is the geometrical area (GA). Based on this geometrical area (GA), the size and position of the encircling flanges can be defined. Subsequently, the height and shape of said storage volume and said single fluid volume are defined.In relation to a flat structure, said casing has an inner surface and said inner volume is enclosed by said inner surface, wherein said inner volume is defined by a width_Wv and a length_Lv each in parallel to said geometrical area (GA) and a maximum height_Hv defined at right angles to said geometrical area (GA), wherein the following applies: Wv/Hv > 4 and Lv/Hv > 6. An advantage of the invention is the flat design of the storage device. The ratio of the sizes defined above is a first theoretical approach for determining the essential features for the flat design. A ratio greater than 4 defines a flat storage device 1.

According to a relevant aspect in terms of heat conduction said base plate has a structure of upper ribs on one side of the base plate, wherein said upper ribs raise preferred perpendicular in relation to said base plate, wherein said ribs are arranged in the storage volume. Using these upper ribs, the contact surface between the conductive element and the PCM is increased.

It is advantageous in terms of efficiency that said upper ribs are designed as a conductive matrix that forms cavities or cells to receive said PCM. This increases the contact surface between the conductive element and the PCM. Increasing the contact surface increases the heat flow, i.e. the amount of heat conducted per unit time.

In relation to an easy closable connection, said lower casing has a structure of walls on said inner surface, wherein said walls raise preferred perpendicular in relation to said lower casing, wherein said walls are arranged in the fluid volume. Said walls are designed as a fluid guiding structure that forms at least one channel for the fluid, wherein said channel is connecting said inlet hose with said outlet hose. The walls do not form a separat housing or different housing sections that limit the essential property of a single housing. The channels constructed with the walls are not dividing the inner volume into separeted volumes. Due to the channel structure, this volume is completely crossed by the fluid. Said wall or said walls are also generating turbulences in the fluid which encreases the heat transfer.

### BRIEF DESCRIPTION OF THE DRAWINGS

Various aspects of the invention, including its features and advantages, will be readily understood from the example embodiments discussed in the following detailed description and the accompanying drawings, in which:
- Figure 1: illustrates an exploded view of a L-shaped embodiment of a storage device;
- Figure 2: illustrates an exploded view of a square shaped embodiment of a storage device with a reinforcement structure on the top of the casing;
- Figure 3: illustrates a sectional view of a storage device;
- Figure 3a: illustrates a detail of figure 3;
- Figure 3b: illustrates a detail of figure 3a;
- Figure 4: illustrates a sketch of a top view of a storage device with a plane inclined geometrical area;
- Figure 5: illustrates a sectional view according to figure 4;
- Figure 6: illustrates a sketch of a sectional view of a storage device with several inclined geometrical areas.

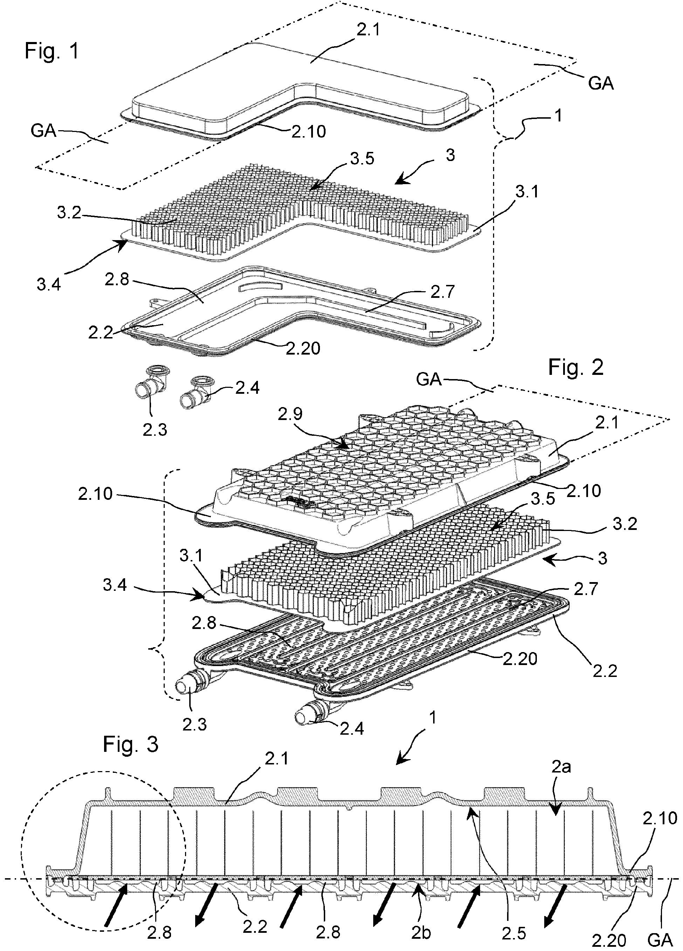

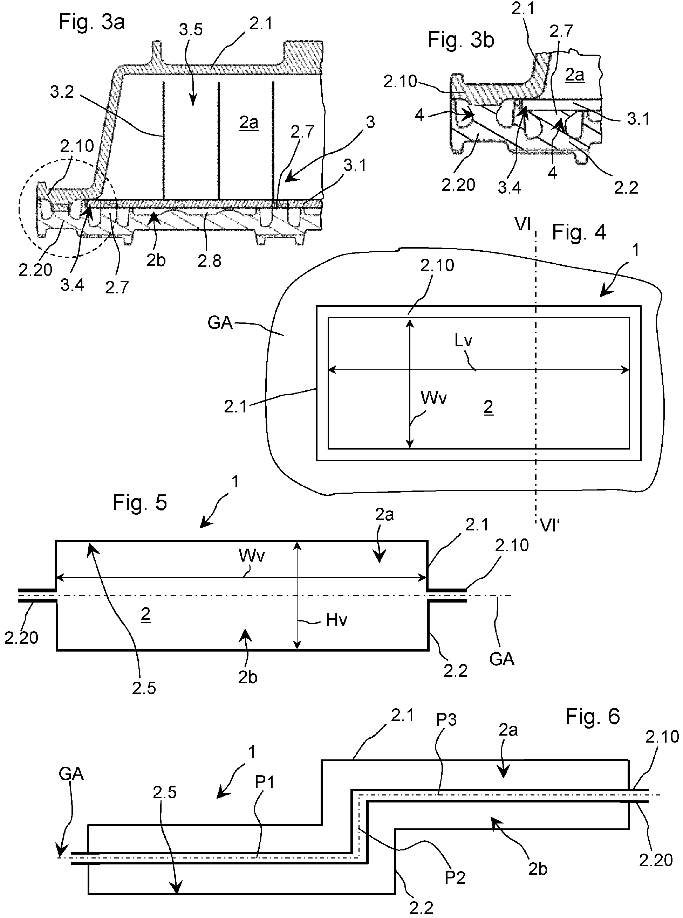

Figures 1 and 2 show the three-part principle of the structure of a storage device 1 with a casing according to the invention. Said casing consists of two parts, an upper casing 2.1 and a lower casing 2.2. The third component is a conductive element 3, which is arranged between the two casings 2.1, 2.2. Said casings 2.1, 2.2 are made of thermoplastic and are connected to each other as shown in fig. 3, 3a, 3b. With the connection said casings 2.1, 2.2 enclose an inner volume 2 (see Fig. 5). Said upper casing 2.1 forms a storage volume 2a and said lower casing 2.2 forms a fluid volume 2b. Said fluid volume 2b is encapsulated in the inner volume 2 between said lower casing 2.2 and said conductive element 3. Especially said upper casing 2.1 forms a storage volume 2a for PCM and said lower casing 2.2 forms a fluid volume 2b for a fluid for transporting thermal energy into and out of the storage device 1. Said two volumes 2a, 2b together form said inner volume 2, which is limited and defined by the inner surface 2.5 of the casing 1 (see fig. 3a, 6). Said conductive element 3 is arranged between the two casings 2.1, 2.2 and divides said inner volume 2 into said storage volume 2a and said fluid volume 2b. It is essential for the invention that neither the storage volume 2a nor the fluid volume 2b is divided into several small volumes. Each of said two volumes 2a, 2b forms a single volume, so that the combination of said two volumes forms said inner volume 2. There is only one of each of the volumes 2, 2a, 2b. This allows the thermal energy to be transferred very well because it can be distributed very well in each of said individual volumes 2a, 2b.

The upper casing 2.1 and the lower casing 2.2 each have a flange 2.10, 2.20 encircling said casings 2.1, 2.2. To connect the two casings 2.1, 2.2 said encircling flanges 2.10, 2.20, which are shown in detail in figs. 2, 3, 3a, 3b, are connected with each other. As shown in fig. 3b the two casings 2.1, 2.2 are tightly welded to each other at the flanges 2.10, 2.20. The respective encircling flange 2.10, 2.20 has a connecting surface so that the two encircling flanges 2.10, 2.20 can be brought into contact with each other. The two casings 2.1, 2.2 are sealed to each other and the inner volume 2 is sealed by welding or by a separate sealing element inserted between the two encircling flanges 2.10, 2.20. Fig. 3b shows the welding connection in detail. For this purpose, the two casings 2.1, 2.2 made of plastic are welded to the encircling flanges 2.10, 2.20 via corresponding surfaces without additional material. The welding seam 4 is shown in detail in fig. 3b. Instead of additional welding material, the connecting surfaces are melted and welded together.

Said conductive element 3 is made of metal and is located between the upper casing 2.1 and the lower casing 2.2 in the inner volume 2 of the casing. The conductive element 3 is totally enclosed by the combination of the upper casing 2.1 and the lower casing 2.2, so that the conductive element 3 is accommodated in its entity in the inner volume 2 of the casing. Said conductive element 3 has a base plate 3.1 with a mounting flange 3.4 encircling the base plate 3.1. The conductive element 3 is arranged between the two casings 2.1, 2.2 and is integrated into the inner volume 2. In this embodiment, the conductive element 3 is tightly connected to the lower casing 2.2. For this purpose, the conductive element 3 is welded to the lower casing 2.2. The walls 2.7 of the lower casing 2.2 are used for this purpose, which also form the channel 2.8 by laterally delimiting the channel 2.8 as shown in fig. 1 and 2. The wall 2.7 protrudes beyond the channel structure in the non-welded state, as shown in fig. 3a. Only the wall 2.7 is melted for welding. The conductive element 3 is preferably made of an aluminium alloy. After welding the wall 2.7 to the base plate 3.1, a mushroom-shaped weld seam is formed, as shown in fig. 3b. Also with methods of glueing or soldering a tight connection would be possible between the conductive element 3 and the lower casing 2.2. The conductive element 3 is made of a metallic alloy with a thermal conductivity greater than 10 W/(mK)

Figures 1 and 2 show the structures of the three components in more detail. The cross-section of the lower casing 2.2 has several of said walls 2.7, which form the channel 2.8. The channel 2.8 connects the inlet hose 2.3 provided on the lower casing 2.2 with the outlet hose 2.4 also provided on the lower casing 2.2. For a tight connection, the wall 2.7 is partially melted and connected to the base plate 3.1 by a welding and/or gluing process. This connection creates and seals an all sides closed and tight channel structure in the lower casing 2.2.

Figures 3 and 3a show the wall 2.7 in a non-welded state. To illustrate the material bond by welding, the wall 2.7 overlaps with the base plate 3.1. No filler material is introduced for the welding process. Instead, the overlap of the wall 2.7 shown in fig. 3a is melted and thus joined to the base plate 3.1. These mushroom-like structures are shown in Figure 3b.

The base plate 3.1 has a circumferential mounting flange 3.4. The base plate 3.1 can be clamped between the two casings 2.1, 2.2 via this mounting flange 3.4. Figures 3 and 3a show the conductive element 3 being in contact with the storage volume 2a and the PCM (not shown) on one side and with the fluid volume 2b and the fluid (not shown) on its opposite side. As a result, the thermal energy is transferred indirectly via the conductive element 3 between the PCM and the fluid in both directions, depending on the temperature gradient. The conductive element 3 has a relatively high thermal conductivity of more than 10 W/(mK). With an aluminium alloy, for example, the conductive element 3 conducts and transfers the thermal energy between the PCM and the fluid extremely efficiently.

The transfer of thermal energy between the PCM and the conductive element 3 is achieved via special structure on the base plate 3.1. For this purpose, upper ribs 3.2 are provided on the base plate 3.1, which form a larger surface for a optimised thermal conduction with the PCM. According to the embodiment examples, the upper ribs 3.2 are shaped as cells 3.5 with a six-layer honeycomb structure that is open in the direction of the storage volume 2a and can be filled with PCM.

The design and connection technology described and illustrated also enables a relatively flat and complex architecture. A geometrical area (GA), parallel to which the storage device 1 essentially extends, serves as the definition and orientation of the flat and complex architecture. The geometrical area (GA) defines a plane that runs between the two encircling flanges 2.10, 2.20. The flanges 2.10, 2.20 of the two housings are adjacent to each other and define a geometrical area (GA) in parallel to and between the two encircling flanges 2.10, 2.20. According to the embodiments shown in fig. 1, 2, 3, 4 and 5 the geometrical area (GA) defines a geometrically 2D-running plane. The embodiments shown in fig. 6 show a 3D-running shape with three planes P1, P2, P3 arranged inclined to each other.

Starting from the geometrical area (GA), the inner volume 2 is defined by a length Lv and a width Wv and a height Hv, whereby Lv/Wv is defined parallel to the geometrical area (GA) and Hv is defined at right angles to the geometrical area (GA). The geometrical area (GA) can extend two-dimensionally or three-dimensionally as shown in figs. 1 to 3b and 5. Alternatively, a shape of the encircling flanges 2.10, 2.20 can be provided in which the geometrical area (GA) is any three-dimensionally curved surface or has several areas curved around different axes. This special flat shape allows any free 3D design and offers design freedom for easy integration into predefined installation spaces. The geometrical area could also have complex and non-symmetrical shape.

The connection according to the invention between the two casings 2.1, 2.2 and between the conductive element 3 and the lower casing 2.2, in each case without a separate sealing element, makes such three-dimensional structures relatively easy to create. Shaping the three components, for example by compression moulding, makes it possible to join the three components together in a further pressing process by applying additional local heat. Local heat input is necessary for the described welding processes. For the connection between the lower casing 2.2 and the conductive element 3, for example, a filler material such as adhesive can be used. After the three components have been prepared accordingly, they are pressed together in appropriate moulds to join them. Any additional work steps for sealing and joining are not necessary according to the invention. The flat and geometrically very flexible design enables the storage device 1 to be used as a load-bearing component when installed. For such applications, reinforcement structures 2.9 can be provided on the outer surface of the casing, as shown in fig. 2, for example. These reinforcement structures 2.9 increase the rigidity of the storage device 1.

Based on a two-dimensional and flat shape, the ratio Wv/Hv > 4 and Lv/Hv > 6. According to the invention, a ratio greater than 4 defines a flat storage device 1. In an embodiment example not shown, the two hoses 2.3, 2.4 are not arranged on a common side of a casing 2.1, 2.2 but are arranged opposite and parallel to each other relative to a casing 2.1, 2.2 or on any two sides of the casing 2.1, 2.2 not parallel to each other.

### List of references

- 1: storage device
- 2: inner volume
- 2a: storage volume
- 2b: fluid volume
- 2.1: upper casing
- 2.2: lower casing
- 2.3: inlet hose
- 2.4: outlet hose
- 2.5: inner surface
- 2.7: wall
- 2.8: channel
- 2.9: reinforcement structure
- 2.10: encircling flange
- 2.20: encircling flange
- 3: conductive element
- 3.1: base plate
- 3.2: upper ribs
- 3.3: lower ribs
- 3.4: mounting flange
- 3.5: cells
- 4: welding seam
- GA: geometrical area
- Hv: height
- Lv: length
- P1-P3: planes
- Wv: width

## Claims

1. Storage device (1) for storing thermal energy with
a casing with an inner volume (2) for receiving a fluid wherein said casing has an inlet hose (2.3) and an outlet hose (2.4) for said fluid and wherein the storage device (1) contains phase change material (PCM) **characterized in that**
said casing has an upper casing (2.1) and a lower casing (2.2) attached to each other and encases an inner volume (2), wherein a conductive element (3) is positioned in said inner volume (2) and said conductive element (3) is separating said inner volume (2) into a storage volume (2a) for PCM and into a fluid volume (2b).

2. Storage device (1) according to claim 1,
**characterized in that**
said upper casing (2.1) forms one single storage volume (2a) and said lower casing (2.2) forms one single fluid volume (2b), wherein said inner volume (2) is a combination of said single storage volume (2a) and said single fluid volume (2b).

3. Storage device (1) according to claim 1 or 2,
**characterized in that**
said conductive element (3) is a separate element being totally located in said inner volume (2), wherein said conductive element (3) is tightly attached to said upper casing (2.1) and / or to said lower casing (2.2).

4. Storage device (1) according to any one of the preceding claims,
**characterized in that**
said upper casing (2.1) and said lower casing (2.2) each have a flange (2.10, 2.20), wherein said encircling flange (2.10, 2.20) is encircling said casing (2.1, 2.2), wherein said upper casing (2.1) is mounted tightly with its encircling flange (2.10) at said encircling flange (2.20) of said lower casing (2.2).

5. Storage device (1) according to any one of the preceding claims,
**characterized in that**
said conductive element (3) has a base plate (3.1) and said base plate (3.1) is tightly attached to said upper casing (2.1) and / or to said lower casing (2.2).

6. Storage device (1) according to any one of the preceding claims,
**characterized in that**
said casings (2.1, 2.2) are made of plastic or thermoplastic or a combination with ceramic and said conductive element (3) is made of metal or conductive thermoplastic, having a thermal conductivity larger than 10 W/(mK).

7. Storage device (1) according to any one of the preceding claims,
**characterized in that**
a PCM is encapsulated in said single storage volume (2a) between said upper casing (2.1) and said conductive element (3).

8. Storage device (1) according to any one of the preceding claims,
**characterized in that**
said upper casing (2.1) and / or said lower casing (2.2) is tightly mounted at said conductive element (3) with at least one of the following methods: glueing, soldering, welding, melting and / or with a form fitting locking.

9. Storage device (1) according to any one of the preceding claims 4 to 8, **characterized in that** a geometrically definable geometrical area (GA) of said casing is defined in parallel to and between said two encircling flanges (2.10, 2.20) of said casing (2.1, 2.2), wherein said geometrical area (GA) defines a geometrically 2D- or 3D-running plane and / or a curved surface area and / or several planes (P1, P2, P3) or surface areas arranged inclined to each other.

10. Storage device (1) according to claim 9,
**characterized in that** said casing has an inner surface (2.5) and said inner volume (2) is enclosed by said inner surface (2.5), wherein said inner volume (2) is defined by a width_Wv and a length_Lv each in parallel to said geometrical area (GA) and a maximum height_Hv defined at right angles to said geometrical area (GA), wherein the following applies:
Wv/Hv > 4 and Lv/Hv > 6.

11. Storage device (1) according to any one of the preceding claims 5 to 10, **characterized in that** said base plate (3.1) has a structure of upper ribs (3.2) on one side of the base plate (3.1), wherein said upper ribs (3.2) raise preferred perpendicular in relation to said base plate (3.1), wherein said ribs (3.2) are arranged in the storage volume (2a).

12. Storage device (1) according to claim 11,
**characterized in that** said upper ribs (3.2) are designed as a conductive matrix that forms cavities or cells (3.5) to receive said PCM.

13. Storage device (1) according to any one of the preceding claims 10 to 12, **characterized in that** said lower casing (2.2) has a structure of walls (2.7) on said inner surface (2.5), wherein said walls (2.7) raise preferred perpendicular in relation to said lower casing (2.2), wherein said walls (2.7) are arranged in the fluid volume (2b).

14. Storage device (1) according to claim 13,
**characterized in that** said walls (2.7) are designed as a fluid guiding structure that forms at least one channel (2.8) for the fluid, wherein said channel (2.8) is connecting said inlet hose (2.3) with said outlet hose (2.4).

15. Storage device (1) according to any one of the preceding claims,
**characterized in that**
said storage device (1) is
a) part of a cooling system or a Thermal Management System or
b) a part of a Thermal Management Module device to manage the refrigerant or coolant flow in a thermal management system or
c) a Thermal Management Module device for transportation industry or for battery electrical vehicle or for hybrid vehicle or for heavy duty industry.
